# EUROPÄISCHE PATENTSCHRIFT

(11) **EP 2 257 578 B1**
(45) Veröffentlichungstag und Bekanntmachung des Hinweises auf die Patenterteilung: **13.08.2014**
(21) Anmeldenummer: 09723023.9
(22) Anmeldetag: 10.02.2009
(51) Int. Cl.: C08F 220/04, C08F 220/26

(54) **SEMIKONTINUIERLICH BETRIEBENES VERFAHREN ZUR HERSTELLUNG VON COPOLYMEREN**
SEMI CONTINUOUS OPERATIONAL METHOD FOR PRODUCING COPOLYMERS
PROCÉDÉ SEMI-CONTINU POUR PRODUIRE DES COPOLYMÈRES

(30) Priorität: 19.03.2008 EP 08102758
(43) Veröffentlichungstag der Anmeldung: 08.12.2010
(73) Patentinhaber: Construction Research & Technology GmbH, 83308 Trostberg (DE)
(72) Erfinder: ALBRECHT, Gerhard, 83209 Prien (DE); LORENZ, Klaus, 84539 Zangberg (DE); SCHOLZ, Christian, 83308 Trostberg (DE); WAGNER, Petra, 83308 Trostberg (DE)
(86) Internationale Anmeldenummer: PCT/EP2009/051481
(87) Internationale Veröffentlichungsnummer: WO 2009/115371

(56) Entgegenhaltungen:
- EP-A- 1 690 877
- WO-A-2005/075529
- DE-A1-102005 061 153

## Beschreibung

Die vorliegende Erfindung betrifft ein Verfahren zur Herstellung eines Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Qualität des Verfahrensprodukts noch weiter zu verbessern und zwar möglichst ohne in einem wesentlichen Maße die Wirtschaftlichkeit des Verfahrens zu verschlechtern.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel/Wasserreduktionsmittel, eine gute Performance zeigen.

Die Lösung dieser Aufgabe ist ein Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das in dem Polymerisationsreaktor vorgelegte Polyethermakromonomer zu mindestens 70 Mol-% durch die radikalische Polymerisation umgesetzt wird, durch die Umsetzung des Säuremonomers in dem Copolymer eine Säurestruktureinheit entsteht, welche sich auf den pH-Wert des wässrigen Mediums in einem geringeren Maße senkend auswirkt als das Säuremonomer als solches, wobei die Dosierung des Säuremonomers in den Polymerisationsreaktor in der Weise erfolgt, dass zunächst in dem wässrigen Medium ein Polymerisations-pH-Wert eingestellt wird und anschließend bis zur Umsetzung von 70 Mol-% des in dem Polymerisationsreaktor vorgelegten Polyethermakromonomers soviel Säuremonomer pro Zeiteinheit in den Polymerisationsreaktor eingeleitet wird, dass der pH-Wert in dem wässrigen Medium höchstens ± 0,3 vom zunächst eingestellten Polymerisations-pH-Wert abweicht.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Es ist nicht erforderlich, dass vor der Eindosierung des Säuremonomers sämtliches in dem Polymerisationsreaktor durch radikalische Polymerisation umgesetztes Polyethermakromonomer in dem Polymerisationsreaktor vorgelegt wird. Allerdings werden bevorzugt mindestens 50 Mol %, besonders bevorzugt mindestens 80 Mol % und in vielen Fällen etwa 100 % der in das Copolymer eingebauten Polyethermakromonomerstruktureinheiten durch Umsetzung von Polyethermakromonomer erzeugt, welches vor der Eindosierung des Säuremonomers in dem Polymerisationsreaktor vorgelegt wird. Die dann ggf. verbleibenden (normalerweise) maximal 50 Mol %, bevorzugt (normalerweise) maximal 20 Mol % des Polyethermakromonomers werden in der Regel während der Eindosierung des Säuremonomers kontinuierlich dem Polymerisationsreaktor zugeführt. Dabei kann Polyethermakromonomer getrennt vom Säuremonomer (siehe nachstehendes Synthesebeispiel 4) und/oder dem Säuremonomer beigemischt (indem z.B. in der Dosiereinrichtung neben dem Säuremonomer auch Polyethermakromonomer vorgelegt wird) dem Polymerisationsreaktor zugeführt werden.

Die Gegebenheit, dass durch die Umsetzung des Säuremonomers in dem Copolymer eine Säurestruktureinheit entsteht, welche sich auf den pH-Wert des wässrigen Mediums in einem geringeren Maße senkend auswirkt als das Säuremonomer als solches, bedeutet, dass das Säuremonomer eine höhere Säurestärke aufweist als die entsprechende Säurestruktureinheit im Copolymer (dieser Umstand ist bei den meisten Säuremonomeren/Säuremonomerstruktureinheiten gegeben).

Die Dosiereinrichtung kann verschiedenartig ausgebildet sein und manuell und/oder automatisch gesteuert werden. Im Falle der manuellen Steuerung kann z.B. eine Person den relevanten pH-Wert fortlaufend an einem eingerichteten pH-Messgerät ablesen und entsprechend aus einem Behälter kontinuierlich das Säuremonomer eindosieren. Eine automatische Steuerung kann die Zufuhrgeschwindigkeit des Säuremonomers (bevorzugt stufenlos) direkt mit dem entsprechenden pH-Wert- Messsignal koppeln.

Ein wesentlicher Vorteil des erfindungsgemäßen Verfahrens ist, dass aufgrund der speziellen Dosierung besonders einheitliche Copolymere herstellbar sind - und zwar bezüglich Molekulargewicht (niedriger Dispersionsindex der Molekulargewichtsverteilung) und bezüglich des relativen Anteils der Monomerstruktureinheiten im Copolymer (chemische Einheitlichkeit). Diese Einheitlichkeit der Copolymere bewirkt letztendlich eine besonders gute Eignung als Fließmittel für hydraulische Bindemittel. Das erfindungsgemäße Verfahren kann außerdem als wirtschaftlich angesehen werden (mit einem nur geringen Dosieraufwand wird ein hoher Effekt erreicht - " hohe Dosiereffizienz" ).

In einer bevorzugten Ausführungsform der Erfindung wird durch die Umsetzung des Säuremonomers eine Struktureinheit im Copolymer erzeugt, die gemäß einer der allgemeinen Formeln (la), (Ib), (Ic) und/oder (Id) ist 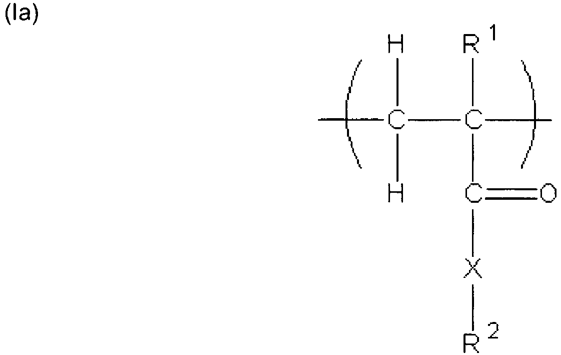 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 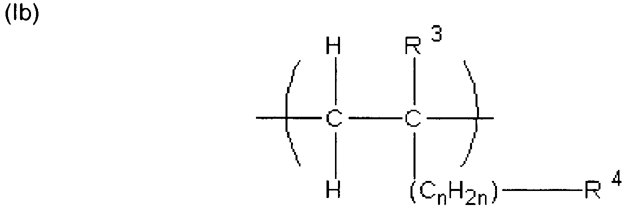 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 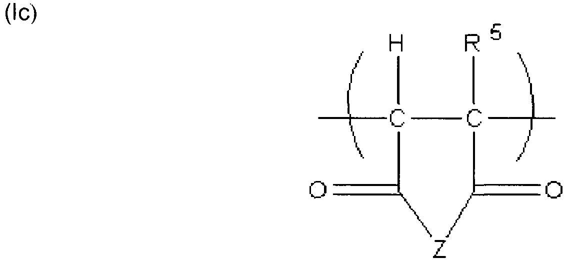 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 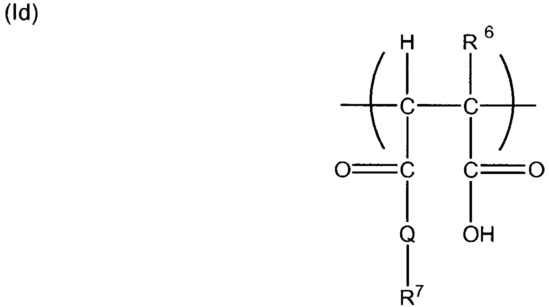 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Es soll erwähnt sein, dass vorstehend aufgezeigte Säurefunktionen im Copolymer zumindest teilweise in neutralisierter Form vorliegen können.

Als Säuremonomer wird bevorzugt Methacrylsäure, Acrylsäure, Maleinsäure, Maleinsäureanhydrid, ein Halbester der Maleinsäure oder eine Mischung aus mehreren dieser Komponenten eingesetzt.

In einer bevorzugten Ausführungsform wird durch die Umsetzung des Polyethermakromonomers eine Struktureinheit im Copolymer erzeugt, die gemäß einer der allgemeinen Formeln (IIa), (IIb) und/oder (IIc) ist 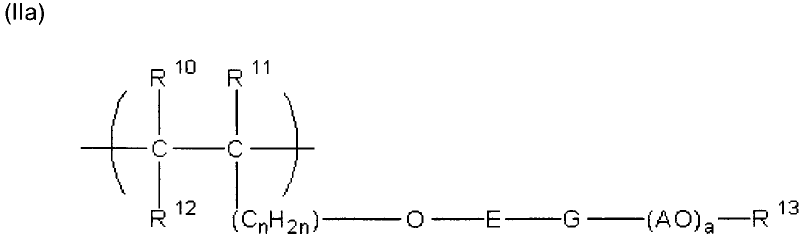 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 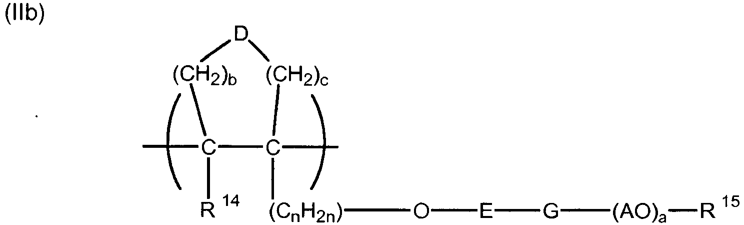 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 o-der 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 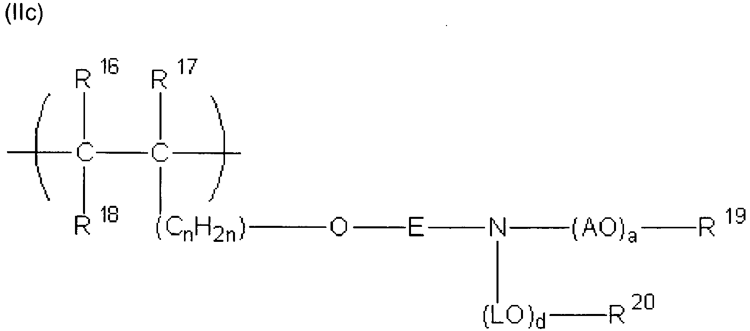 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Bevorzugt wird als Polyethermakromonomer alkoxyliertes Isoprenol und/oder alkoxylierter Hydroxybutylvinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 340 eingesetzt.

Neben dem Säuremonomer und dem Polyethermakromonomer können noch weitere Monomertypen zum Einsatz kommen. Dies wird dann in der Regel so in die Praxis umgesetzt, dass als monomerer Ausgangsstoff eine vinylisch ungesättigte Verbindung in den Polymerisationsreaktor eingeleitet wird, welche durch Polymerisation umgesetzt wird und dadurch eine Struktureinheit im Copolymer erzeugt, die gemäß der allgemeinen Formeln (IIIa) und/oder (IIIb) vorliegt 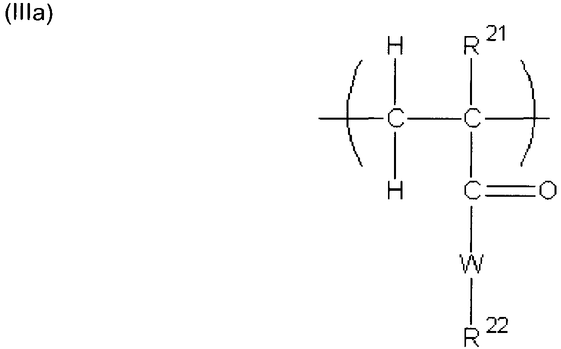 mit
R²¹ gleich oder verschieden sowie repräsentiert durch H und/oder eine unverzweigte oder verzweigte C₁ - C₄ Alkylgruppe (bevorzugt H oder CH₃);
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe (C₁, C₂, C₃, C₄ oder C₅ ist zwar jeweils typisch, bevorzugt ist jedoch C₂ und/oder C₃); 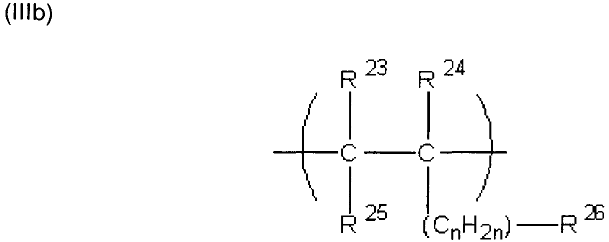 mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe (bevorzugt H und/oder CH₃);
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

Typische Monomere, welche durch Polymerisation die Struktureinheiten (IIIa) oder (IIIb) erzeugen, sind beispielsweise 2-Hydroxypropylacrylat, Isoprenol oder Allylalkohol. Als weiteres typisches Monomer wäre in diesem Zusammenhang noch Hydroxybutylvinylether zu nennen.

Normalerweise werden insgesamt mindestens 45 Mol %, bevorzugt jedoch mindestens 80 Mol % aller Struktureinheiten des Copolymers durch radikalische Polymerisation von Säuremonomer und Polyethermakromonomer erzeugt.

In einer bevorzugten Ausführungsform wird soviel Polyethermakromonomer pro eindosiertes Mol Säuremonomer in dem Polymerisationsreaktor vorgelegt, dass sich im gebildeten Copolymer ein arithmetisch mittleres molares Verhältnis von Säuremonomerstruktureinheiten zu Polyethermakromonomerstruktureinheiten von 20:1 bis 1:1, bevorzugt von 12:1 bis 1:1 einstellt..

In der Regel wird als radikalischer Polymerisationsinitiator ein Redoxinitiator eingesetzt. Meist wird dann als Redoxinitiator das System H₂O₂/FeSO₄ gewählt, bevorzugt zusammen mit einem Reduktionsmittel. Als Reduktionsmittel kommen in Betracht Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon. Als das Redox-Initiatorsystem kommen auch andere Systeme in Frage, z.B. solche, die auf t-Butylhydroperoxid, Ammonium- oder Kaliumperoxidisulfat basieren.

In einer Ausführungsform werden Initiatorkomponenten, z.B. H₂O₂, und das Polyethermakromonomer in vorgemischter Form gleichzeitig (bevorzugt in einem Strom) in den Polymerisationsreaktor eingeleitet.

Grundsätzlich können jedoch als Initiatoren sämtliche unter Polymerisationsbedingungen in Radikale zerfallende Verbindungen wie z.B. Peroxide, Hydroperoxide, Persulfate, Azoverbindungen und Perphosphate eingesetzt werden. In Kombination der Radikalbildner mit geeigneten Reduktionsmitteln erhält man bekannte Redoxsysteme bzw. Redoxkatalysatoren. Geeignete Reduktionsmittel sind beispielsweise Natriumsulfit, das Dinatriumsalz der 2-Hydroxy-2-sulfonatoessigsäure, das Dinatriumsalz der 2-Hydroxy-2-sulfinatoessigsäure, Natriumhydroxymethansulfinat, Ascorbinsäure, Iso-Ascorbinsäure, Amine wie Diethanolamin oder Triethanolamin, Hydroxylamin oder Mischungen davon. Zweckmäßigerweise setzt man bei Verwendung von Redoxsystemen bzw. Katalysatoren zusätzlich wasserlösliche Salze von Übergangsmetallen wie Eisen, Kobalt, Nickel oder Silber ein, bevorzugt werden hierbei (vorwiegend in zweiwertiger Form vorliegende) Eisensalze verwendet.

Meist wird nach Einstellung des Polymerisations-pH-Werts und während der Eindosierung des Säuremonomers eine Komponente des Redoxinitiatorsystems und/oder Reduktionsmittel in den Polymerisationsreaktor eingeleitet.

In der Regel wird der Polymerisations-pH-Wert in dem wässrigen Medium so eingestellt, dass bezüglich des eingesetzten radikalischen Polymerisationsinitiators die Radikalbildung pro Zeiteinheit (Radikalausbeute) hoch, bevorzugt in etwa maximal ist. Der eingesetzte Polymerisationsinitiator bzw. das eingesetzte Polymerisationsinitiatorsystem gibt somit quasi normalerweise schon den Polymerisations-pH-Wert in etwa vor.

Typischerweise liegt das wässrige Medium in Form einer wässrigen Lösung vor.

Normalerweise liegt der Polymerisationsreaktor als semikontinuierlicher Rührkessel vor.

Häufig wird das in dem Polymerisationsreaktor vorgelegte Polyethermakromonomer zu mindestens 80 Mol-%, bevorzugt zu mindestens 90 Mol-% durch die radikalische Polymerisation umgesetzt.

In der Regel wird bis zur Umsetzung von 70 Mol-% des in dem Polymerisationsreaktor vorgelegten Polyethermakromonomers soviel Säuremonomer pro Zeiteinheit in den Polymerisationsreaktor eingeleitet, dass der pH-Wert in dem wässrigen Medium höchstens ± 0,2, bevorzugt höchstens ± 0,1 (idealsterweise gar nicht) vom zunächst eingestellten Polymerisations-pH-Wert abweicht.

Meist wird das in dem Polymerisationsreaktor vorgelegte Polyethermakromonomer zu mindestens 80 Mol-% durch die radikalische Polymerisation umgesetzt und bis zur Umsetzung von 80 Mol-% des in dem Polymerisationsreaktor vorgelegten Polyethermakromonomers soviel Säuremonomer pro Zeiteinheit in den Polymerisationsreaktor eingeleitet, dass der pH-Wert in dem wässrigen Medium höchstens ± 0,3 vom zunächst eingestellten Polymerisations-pH-Wert abweicht.

Üblicherweise beträgt der Polymerisations-pH-Wert 4,0 bis 7,0, bevorzugt 4,5 bis 6,5 sowie besonders bevorzugt 4,8 bis 6,0 und die Temperatur des wässrigen Mediums während der radikalischen Polymerisation 0 bis 90 °C, bevorzugt 10 bis 35 °C.

Bevorzugt wird das Säuremonomer zusammen mit Wasser in der Dosiereinheit vorgelegt und eine wässrige Lösung des Säuremonomers aus der Dosiereinrichtung in den Polymerisationsreaktor eindosiert, wobei vor der Eindosierung in den Polymerisationsreaktor eine Teilmenge des Säuremonomers durch die Zugabe von Base in das entsprechende Säuremonomersalz umgesetzt werden kann. Eine solche vorab erfolgende Teilneutralisierung des Säuremonomers kann neben der Dosiergeschwindigkeit als weitere Steuergröße zur Regulierung des pH-Werts in dem wässrigen Medium angewendet werden.

In der Regel erfolgt die Einstellung des Polymerisations-pH-Werts in dem wässrigen Medium durch Eindosierung des Säuremonomers in den Polymerisationsreaktor sowie ggf. durch Zugabe einer Base in den Polymerisationsreaktor und/oder in die Dosiereinrichtung, so dass bereits vor der Einstellung des Polymerisations-pH-Werts Säuremonomer und/oder Säuremomersalz in dem Polymerisationsreaktor vorliegen können.

Meist wird ein Kettenregler, welcher bevorzugt in gelöster Form vorliegt, in den Polymerisationsreaktor eingeleitet.

Es werden außerdem Copolymere beschrieben, welche gemäß dem vorstehend beschriebenen Verfahren herstellbar sind. Das Copolymer liegt normalerweise als Kammpolymer vor.

Weiterhin wird beschrieben die Verwendung des erfindungsgemäßen Copolymers als Dispergiermittel für hydraulische Bindemittel oder für latenthydraulische Bindemittel.

Im Folgenden soll die Erfindung anhand von Ausführungsbeispielen näher beschrieben werden.

### Synthese- und Vergleichsbeispiele

### Synthesebeispiel 1

In einem Glasreaktor - ausgestattet mit Rührer, pH-Elektrode und mehreren Zulaufeinrichtungen wurden 200 g deionisiertes Wasser und 225 g (0,075 Mol) Vinyloxybutylpolyethylenglykol-3000 (Anlagerungsprodukt aus 65 Mol Ethylenoxid an Hydroxybutylmonovinylether mit einem mittleren Molekulargewicht von 3000 g/Mol) vorgelegt und auf eine Polymerisationsstarttemperatur von 15°C gekühlt (Vorlage).

In einem separaten Zulaufgefäß wurden 16,2 g (0,2025 Mol) Acrylsäure mit 42 g deionisiertem Wasser homogen vermischt. Mit 7,7 g einer 40 %-igen Kaliumhydroxydlösung wurde die Lösung unter Kühlen auf eine Temperatur von 20°C und einen pH-Wert von 4,0 eingestellt. Anschließend wurden 0,7 g 3-Mercaptopropionsäure als Molekulargewichtsregler zugegeben (Lösung A).

Parallel wurde eine zweite Lösung bestehend aus 1,5 g Brüggolit FF6 (Fa. Brüggemann GmbH) und 23,5 g Wasser hergestellt (Lösung B).

Unter Rühren und Kühlen wurden 23,3 g der Lösung A sowie anschließend 1,8 g einer 20 %-igen wässrigen Natronlauge zur Vorlage gegeben, so dass ein pH-Wert von 5,8 resultierte.

Nach Erreichen dieses pH-Wertes wurden nacheinander 0,015 g Eisen-II-sulfat-Heptahydrat, 0,1 g der Lösung B sowie 0,94 g Wasserstoffperoxid (30% in Wasser) zum Vorlagegemisch gegeben. Zeitgleich wurde mit der Zugabe von Lösung A und Lösung B zur gerührten Vorlage begonnen.

Die Zugabegeschwindigkeit der Lösung A wurde hierbei entsprechend des folgenden Dosierprofils so modifiziert, dass der pH-Wert in der Vorlage über den gesamten Zugabezeitraum von 45 Minuten konstant auf einem Wert von 5,8 +/- 0,1 gehalten wurde:

| | | | | | | | | | | | | | | | | |
|---|---|---|---|---|---|---|---|---|---|---|---|---|---|---|---|---|
| t (min) | 0 | 1,5 | 3 | 6 | 9 | 12 | 15 | 18 | 21 | 24 | 27 | 30 | 33 | 36 | 39 | 45 |
| Lösung A (g/h) | 29 | 59 | 103 | 123 | 115 | 103 | 88 | 71 | 56 | 44 | 35 | 26 | 21 | 15 | 13 | 0 |

Lösung B wurde über den genannten Zeitraum von 45 Minuten parallel mit einer Do-siergeschwindigkeit von 7 g/h zugegeben. Anschließend wurde die Dosiergeschwindigkeit der Lösung B auf 50 g/h erhöht und über einen Zeitraum von 10 Minuten unter Rühren in das Vorlagegemisch gepumpt. Nach vollständiger Zugabe der Lösungen A und B wurde kein Peroxyd mehr im Reaktionsgefäß gefunden.

Anschließend wurde die erhaltene Polymerlösung mit etwa 10 g einer 20 %-igen Natriumhydroxid-Lösung auf einen pH-Wert von 6,5 eingestellt.

Das erhaltene Copolymer fiel in einer leicht gelblich gefärbten Lösung an, die einen Feststoffgehalt von 46,5 % aufwies. Das mittlere Molekulargewicht des Copolymers lag bei Mw 63000 g/Mol; Mp 48000 g/Mol; Rest-PEG: 11 %; Polydispersität: 1,63.

### Vergleichsbeispiel 1-1:

Beispiel 1 wurde wiederholt mit dem Unterschied, dass nur 1,2 g NaOH 20% zum Einstellen des pH-Wertes von 5,8 in der Vorlage benötigt wurden und die Dosierung der Lösung A mit einer konstanten Geschwindigkeit von 58 g/h über einen Zeitraum von 45 Minuten erfolgte. Dabei wurde zunächst ein Anstieg des pH-Wertes auf einen Maximalwert von 6,2 nach 12 Minuten und im weiteren Verlauf der Zugabe von Lösung A ein Absinken nach Zugabeende auf 5,8 beobachtet. Feststoffgehalt der erhaltenen Copolymerlösung war 47 %. Das mittlere Molekulargewicht lag bei Mw 66000 g/Mol bzw. Mp 47000 g/Mol bei einem Rest-PEG-Anteil von 14 % und einer Polydispersität von 1,78.

### Vergleichsbeispiel 1-2:

Synthesebeispiel 1 wurde - analog zu Vergleichsbeispiel 1-1 mit linearer Dosiergeschwindigkeit der Lösung A - wiederholt. Jedoch wurde der in den ersten 12 Minuten der Zugabe von A beobachtete Anstieg des pH-Wertes im Polymerisationsgemisch durch Zugabe von 25 %iger Schwefelsäure und der ab 13 Minuten beobachtete Abfall des pH-Wertes durch Zugabe von 20 %iger wässriger Natriumhydroxydlösung so korrigiert, dass der gemessene pH-Wert im Reaktor konstant auf 5,8 +/- 0,1 gehalten werden konnte.

### Synthesebeispiel 2:

Es wurde verfahren wie im Synthesebeispiel 1 beschrieben, jedoch wurde die 3-Mercaptopropionsäure gesondert zugegeben und folgende Monomerkombination verwendet:
Vorlage:

| | |
|---|---|
| Vinyloxybutylpolythylenglykol-1100: | 85,8 g (0,078 Mol) |
| Vinyloxybutylpolythylenglykol-5800: | 127,6 g (0,022 Mol) |
| in deionisiertem Wasser: | 210,0 g |

Lösung A:

| | |
|---|---|
| Maleinsäureanhydrid: | 7,8 g (0,08 Mol) |
| Acrylsäure: | 2,9 g (0,04 Mol) |
| Hydroxypropylacrylat: | 10,4 g (0,08 Mol) |
| Hydroxyethylacrylat: | 4,6 g (0,04 Mol) |
| Kaliumhydroxydlösung (40% in Wasser): | 12,5 g |
| in deionisiertem Wasser | 76,5 g |

Unter Rühren und Kühlen wurden 40,5 g der Lösung A, 0,3 g der Lösung B und 0,5 g 3-Mercaptopropionsäure so zur Vorlage gegeben, dass ein pH-Wert von 5,8 resultierte.

Anschließend wurden 1,9 g 3-Mercaptopropionsäure in die übrige Lösung gegeben. Folgendes Dosierprofil wurde über den Zugabezeitraum von 30 Minuten angewendet, wobei ein konstanter pH-Wert von 5,6 +/-0,2 in der Polymerisationsmischung aufrechterhalten werden konnte:

| | | | | | | | | | | | | |
|---|---|---|---|---|---|---|---|---|---|---|---|---|
| t (min) | 0 | 2 | 4 | 8 | 10 | 12 | 14 | 16 | 18 | 22 | 26 | 30 |
| Lösung A (g/h) | 225 | 250 | 261 | 250 | 225 | 184 | 151 | 121 | 93 | 58 | 36 | 0 |

Lösung B wurde über den genannten Zeitraum von 30 Minuten parallel mit einer konstanten Dosiergeschwindigkeit von 15 g/h und anschließend über einen weiteren Zeitraum von 10 Minuten mit einer Dosiergeschwindigkeit von 50 g/h unter Rühren in die Vorlage gepumpt. Nach vollständiger Zugabe der Lösungen A und B wurde kein Peroxid mehr im Reaktionsgefäß nachgewiesen.

Das erhaltene Copolymer fiel in einer leicht gelblich gefärbten Lösung an, die einen Feststoffgehalt von 44 % aufwies. Das mittlere Molekulargewicht des Copolymers lag bei Mw 31000 g/Mol bzw. 28000 g/Mol. Es wurden 3,8 % Restmonomer (PEG) gefunden. Die Polydispersität des Copolymers lag bei 1,53.

### Vergleichsbeispiel 2-1:

Beispiel 2 wurde wiederholt, jedoch erfolgte die Dosierung der Lösung A mit einer konstanten Geschwindigkeit von 108 g/h über einen Zeitraum von 45 Minuten. Hierbei wurde zunächst ein Anstieg des pH-Wertes auf einen Maximalwert von 5,9 nach 4 Minuten und im weiteren Verlauf der Zugabe von Lösung A ein Absinken bis zum Zugabeende auf 5,4 beobachtet.
Feststoffgehalt der erhaltenen Copolymerlösung: 44 %
Mittleres Molekulargewicht: Mw 33000 g/Mol; Mp 30000 g/Mol;
Rest-PEG: 4,4 %;
Polydispersität: 1,57

### Vergleichsbeispiel 2-2:

Synthesebeispiel 2 wurde - analog zu Vergleichsbeispiel 2-1 mit linearer Dosiergeschwindigkeit der Lösung A - wiederholt. Jedoch wurde der in den ersten 4 Minuten der Zugabe von A beobachtete Anstieg des pH-Wertes im Polymerisationsgemisch durch Zugabe von 25 %iger Schwefelsäure und der ab 4,5 Minuten beobachtete Abfall des pH-Wertes durch Zugabe von 20 %iger Natriumhydroxydlösung so korrigiert, dass der gemessene pH-Wert im Reaktor konstant auf 5,8 gehalten werden konnte.

### Synthesebeispiel 3:

Es wurde verfahren wie in Synthesebeispiel 1 beschrieben, jedoch wurde folgende Monomerkombination verwendet:
Vorlage:

| | |
|---|---|
| Isoprenoloxybutylpolyethylenglykol-500: | 37,5 g (0,075 Mol) |
| Isoprenoloxybutylpolyethylenglykol-1100: | 82,5 g (0,075 Mol) |
| in deionisiertem Wasser: | 87,0 g |

Lösung A

| | |
|---|---|
| Acrylsäure: | 16,2 g (0,225 Mol) |
| Hydroxypropylacrylat: | 5,9 g (0,045 Mol) |
| Kaliumhydroxydlösung (40% in Wasser): | 12,5 g |
| in deionisiertem Wasser | 49,5 g |

Lösung B

| | |
|---|---|
| Brüggolit E01: | 1,5 g |
| in deionisiertem Wasser | 23,5 g |

Unter Rühren und Kühlen wurden 29,0 g der Lösung A, 0,5 g der Lösung B und 1,05 g 3-Mercaptopropionsäure so zur Vorlage gegeben, dass ein pH-Wert von 5,1 resultierte.

Anschließend wurden 0,9 g 3-Mercaptopropionsäure in die übrige Lösung A gegeben. Folgendes Dosierprofil wurde über den Zugabezeitraum von 45 Minuten angewendet, wobei ein konstanter pH-Wert von 5,1-5,2 in der Polymerisationsmischung aufrechterhalten werden konnte:

| | | | | | | | | | | | | | | | | |
|---|---|---|---|---|---|---|---|---|---|---|---|---|---|---|---|---|
| t (min) | 0 | 1,5 | 3 | 6 | 9 | 12 | 15 | 18 | 21 | 24 | 27 | 30 | 33 | 36 | 39 | 45 |
| Lösung A (g/h) | 37 | 74 | 130 | 155 | 144 | 130 | 111 | 89 | 70 | 55 | 44 | 33 | 27 | 19 | 16 | 0 |

Das erhaltene Copolymer fiel in einer leicht gelblich gefärbten Lösung an, die einen Feststoffgehalt von 43 % aufwies. Mittleres Molekulargewicht: Mw 25000 g/Mol; Mp 20000 g/Mol; Rest-PEG: 6,5%; Polydispersität: 1,64.

Anschließend wurde die erhaltene Polymerlösung mit etwa 28 g einer 20%-igen wässrigen Natriumhydroxid-Lösung auf einen pH-Wert von 6,5 eingestellt.

### Vergleichsbeispiel 3-1:

Beispiel 3 wurde wiederholt, jedoch erfolgte die Dosierung der Lösung A mit einer konstanten Geschwindigkeit von 62 g/h über einen Zeitraum von 45 Minuten. Hierbei wurde zunächst ein Anstieg des pH-Wertes auf einen Maximalwert von 5,1 nach 5,4 Minuten und im weiteren Verlauf der Zugabe von Lösung A ein Absinken bis zum Zugabeende auf 5,0 beobachtet.
Feststoffgehalt der erhaltenen Copolymerlösung: 43 %
Mittleres Molekulargewicht: 27.000 g/Mol.

### Vergleichsbeispiel 3-2:

Synthesebeispiel 3 wurde - analog zu Vergleichsbeispiel 3-1 mit linearer Dosiergeschwindigkeit der Lösung A - wiederholt.

Jedoch wurde der in den ersten 7 Minuten der Zugabe von A beobachtete Anstieg des pH-Wertes im Polymerisationsgemisch durch Zugabe von 25 %iger Schwefelsäure und der anschließend beobachtete Abfall des pH-Wertes durch Zugabe von 20 %iger Natriumhydroxydlösung so korrigiert, dass der gemessene pH-Wert im Reaktor konstant auf 5,1 gehalten werden konnte.

### Synthesebeispiel 4

In einem Glasreaktor - ausgestattet mit Rührer, pH-Elektrode und mehreren Zulaufeinrichtungen wurden 100 g deionisiertes Wasser und 112,5 g (0,0375 Mol) Vinyloxybutylpolyethylenglykol-3000 (Anlagerungsprodukt aus 65 Mol Ethylenoxid an Hydroxybutylmonovinylether mit einem mittleren Molekulargewicht von 3000 g/Mol) vorgelegt und auf eine Polymerisationsstarttemperatur von 15 °C gekühlt (Vorlage).

In einem separaten Zulaufgefäß wurden 16,2 g (0,2025 Mol) Acrylsäure mit 42 g deionisiertem Wasser homogen vermischt. Mit 7,7 g einer 40 %-igen Kaliumhydroxydlösung wurde die Lösung unter Kühlen auf eine Temperatur von 20 °C und einen pH-Wert von 4,0 eingestellt. Anschließend wurden 0,7 g 3-Mercaptopropionsäure als Molekulargewichtsregler zugegeben (Lösung A1). In einem zweiten separaten Zulaufgefäß wurden 100 g deionisiertes Wasser und 112,5 g (0,0375 Mol) Vinyloxybutylpolyethylenglykol-3000 (Anlagerungsprodukt aus 65 Mol Ethylenoxid an Hydroxybutylmonovinylether mit einem mittleren Molekulargewicht von 3000 g/Mol) vermischt (Lösung A2).

Parallel wurde eine zweite Lösung bestehend aus 1,5 g Brüggolit FF6 (Fa. Brüggemann GmbH) und 23,5 g Wasser hergestellt (Lösung B).

Unter Rühren und Kühlen wurden 23,3 g der Lösung A1 sowie anschließend 1,8 g einer 20 %igen wässrigen Natronlauge zur Vorlage gegeben, so dass ein pH-Wert von 5,8 resultierte.

Nach Erreichen dieses pH-Wertes wurden nacheinander 0,015 g Eisen-II-sulfat-Heptahydrat, 0,1 g der Lösung B sowie 0,94 g Wasserstoffperoxid (30 % in Wasser) zum Vorlagegemisch gegeben. Zeitgleich wurde mit der Zugabe der Lösungen A 1, A 2 und B zur gerührten Vorlage begonnen. Die Zugabegeschwindigkeit der Lösung A 1 wurde hierbei entsprechend des folgenden Dosierprofils so modifiziert, dass der pH-Wert in der Vorlage über den gesamten Zugabezeitraum von 45 Minuten konstant auf einem Wert von 5,8 +/- 0,1 gehalten wurde:

| | | | | | | | | | | | | | | | | |
|---|---|---|---|---|---|---|---|---|---|---|---|---|---|---|---|---|
| t (min) | 0 | 1,5 | 3 | 6 | 9 | 12 | 15 | 18 | 21 | 24 | 27 | 30 | 33 | 36 | 39 | 45 |
| Lösung A1 (g/h) | 29 | 59 | 103 | 123 | 115 | 103 | 88 | 71 | 56 | 44 | 35 | 26 | 21 | 15 | 13 | 0 |

Lösung A 2 wurde parallel entsprechend des folgenden Dosierprofils aus der separaten Vorlage dosiert:

| | | | | | | | | | | | | | | | | |
|---|---|---|---|---|---|---|---|---|---|---|---|---|---|---|---|---|
| t (min) | 0 | 1,5 | 3 | 6 | 9 | 12 | 15 | 18 | 21 | 24 | 27 | 30 | 33 | 36 | 39 | 45 |
| Lösung A2 (g/h) | 144 | 288 | 504 | 603 | 561 | 504 | 432 | 345 | 273 | 213 | 171 | 128 | 103 | 72 | 63 | 0 |

Lösung B wurde über den genannten Zeitraum von 45 Minuten simultan mit einer Dosiergeschwindigkeit von 7 g/h zugegeben. Anschließend wurde die Dosiergeschwindigkeit der Lösung B auf 50 g/h erhöht und über einen Zeitraum von 10 Minuten unter Rühren in das Vorlagegemisch gepumpt. Nach vollständiger Zugabe der Lösungen A1, A2 und B wurde kein Peroxyd mehr im Reaktionsgefäß gefunden.

Anschließend wurde die erhaltene Polymerlösung mit etwa 11 g einer 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 46,3 % aufwies. Das mittlere Molekulargewicht des Copolymers lag bei Mw 60000 g/Mol; Mp 46000 g/Mol; Rest-PEG: 12 %; Polydispersität: 1,64.

### Bestimmung des pH-Werts:

Der pH-Wert des wässrigen Mediums (welches normalerweise nicht als ideale Lösung vorliegt - denn neben Wasser liegen in dem wässrigen Medium normalerweise in relativ hoher Konzentration auch organische Komponenten vor) wird allgemein zweckmäßigerweise mit einer Glaselektrode gemessen. Als pH-Wert des wässrigen Mediums wurde in den vorstehend beschriebenen experimentellen Beispielen jeweils die Messgröße zugrundegelegt, die gewonnen wird, indem eine pH-Einstabmesskette des Typs H 6381 der Schott AG (Glaselektrode) unter den jeweiligen vom beschriebenen Experiment vorgegebenen Temperatur- und Konzentrationsbedingungen in die Reaktionsmischung eingebracht wird und deren erzeugtes Signal von einem Multiparameter-Messgerät des Typs ProfilLine Multi 197i der Firma WTW als Zahl ausgegeben wird. Die Kalibrierung der oben genannten pH-Einstabmesskette erfolgt mit handelsüblichen pH-Pufferlösungen (pH 4,00 und pH 7,00) in Abhängigkeit der Temperatur.

### Analyse der Copolymere aus den Synthese- und Vergleichsbeispielen:

Die Polymere aus den Synthese- und den Vergleichsbeispielen wurden mittels Größenausschlusschromatographie bezüglich mittlere Molmasse und Umsatz analysiert (Säulenkombination: OH-Pak SB-G, OH-Pak SB 804 HQ und OH-Pak SB 802.5 HQ der Firma Shodex, Japan; Eluent: wässerige Lösung aus HCO₂NH₄ (0,05 mol/l) 80 Vol% und Acetonitril 20 Vol%; Injektionsvolumen 100 µl; Flussrate 0,5ml/min). Die Kalibration zur Bestimmung der mittleren Molmasse erfolgte mit linearen Po-ly(ethylenoxid) und Polyethylenglykolstandards. Als Maß für den Umsatz wird der Peak des Copolymers auf eine relative Höhe von 1 normiert und die Höhe des Peaks des nicht umgesetzten Makromomers/PEG-haltigen Oligomers als Maß für den Gehalt an Restmonomer verwendet.

### Anwendungsbeispiele der Copolymere aus den Synthese- und Vergleichsbeispielen:

Die Polymere aus den Synthese- und den Vergleichsbeispielen wurden auf ihre Eigenschaften als Betonfließmittel in einem geeigneten Testsystem untersucht. Hierzu wurden alle Polymere mit NaOH in Wasser (30 Gew.-%) auf einen einheitlichen Feststoff sowie einheitlichen pH-Wert von 6,5 ± 0,2 eingestellt und mit geringen Mengen eines konventionellen Entschäumers zur Steuerung des Luftporengehalts versetzt.

### Anwendungsbeispiel 1:

Es wurden zunächst 7,00 kg eines Portlandzementes (Karlstadt CEM I 42,5 R), 2 kg eines K-S Mehl Füllers Calcit MS 12, und weiterhin 5,45 kg Quarzsand (0/0,5 und 0/1,0), 16,98 kg Sand 0/4, 5,65 kg Kies 4/8 sowie 18,60 kg Kies 8/16 zusammen gegeben und 10 Sekunden lang trocken gemischt. Dann wurden 0,5 kg Vorgabewasser zugegeben und weitere 120 Sekunden gemischt. Anschließend wurden 3,61 kg Restwasser zugegeben und weitere 60 Sekunden gemischt. Danach jeweils 7,70·10⁻³ kg (berechnet auf 100 %) Polymer (basierend auf dem Polymerfeststoffgehalt) zugegeben und weitere 60 Sekunden gemischt (entspricht einem Wasser/Zementverhältnis von 0,59 und einer Polymerdosierung von 0,11 % Feststoff bezogen auf die Zementeinwaage). Anschließend wurde das Ausbreitmaß gemäß DIN EN 12350-5 direkt nach der Herstellung sowie nach 10, 30 und 60 Minuten bestimmt. Folgende Werte wurden ermittelt:

| Polymer aus | Slump (cm) nach x min. | | | | Ausbreitmaß (cm) nach x min. | | | |
|---|---|---|---|---|---|---|---|---|
| | 0 | 10 | 30 | 60 | 0 | 10 | 30 | 60 |
| Synthesebeispiel 1 | 24 | 24 | 23 | 22 | 66 | 66 | 62,5 | 58,5 |
| Synthesebeispiel 4 | 23 | 23 | 23 | 22 | 64 | 63 | 61,5 | 59,5 |
| Vergleichsbeispiel 1-1 | 20 | 22 | 21 | 16 | 57 | 60,5 | 56,5 | 47,5 |
| Vergleichsbeispiel 1-2 | 22 | 21 | 19 | 18 | 59 | 55 | 53 | 48,5 |

### Anwendungsbeispiel 2:

Es wurde verfahren wie in Anwendungsbeispiel 1 beschrieben, jedoch wurde die Mischung wie folgt angepasst:

| | |
|---|---|
| Zement Allmendingen CEM I 42,5 R | 7,00 kg |
| K-S Mehl Füller Calcit MS 12 | 2,00 kg |
| Quarzsand (0/0,5 und 0/1,0) | 5,57 kg |
| Sand 0/4 | 17,06 kg |
| Kies 4/8 | 4,29 kg |
| Kies 8/16 | 18,60 kg |
| Vorgabewasser | 0,5 kg |
| Restwasser | 3,46 kg |
| Polymer (100 %) | 0,0133 kg |

Daraus ergab sich ein Wasser/Zement Verhältnis von 0,57 und eine Fließmitteldosierung von 0,19 % (Polymerfeststoff auf Zement):

| Polymer | Slump (cm) nach x min. | | | | Ausbreitmaß (cm) nach x min. | | | |
|---|---|---|---|---|---|---|---|---|
| | 0 | 10 | 30 | 60 | 0 | 10 | 30 | 60 |
| Synthesebeispiel 2 | 22 | 22 | 21 | 21 | 60,5 | 60,5 | 57,5 | 56,5 |
| Vergleichsbeispiel 2-1 | 19,5 | 20,5 | 20 | 18 | 55 | 56,5 | 55,5 | 50 |
| Vergleichsbeispiel 2-2 | 22 | 21 | 20 | 19 | 59,5 | 57,5 | 55 | 54,5 |

### Anwendungsbeispiel 3:

Es wurde verfahren wie in Anwendungsbeispiel 1 beschrieben, jedoch wurde die Mischung wie folgt angepasst:

| | |
|---|---|
| Portlandzement Karlstadt CEM I 42,5 R | 7,00 kg |
| K-S Mehl Füller Calcit MS 12 | 2,00 kg |
| Quarzsand (0/0,5 und 0/1,0) | 5,47 kg |
| Sand 0/4 | 17,05 kg |
| Kies 4/8 | 5,67 kg |
| Kies 8/16 | 18,68 kg |
| Vorgabewasser | 0,5 kg |
| Restwasser | 3,53 kg |
| Polymer (100 %) | 0,0126 kg |

Daraus ergibt sich ein Wasser-Zement-Wert von 0,58 und eine Fließmitteldosierung von 0,18% (Feststoff auf Zementgewicht):

| Polymer | Slump (cm) nach x min. | | | | Ausbreitmaß (cm) nach x min. | | | |
|---|---|---|---|---|---|---|---|---|
| | 0 | 10 | 30 | 60 | 0 | 10 | 30 | 60 |
| Synthesebeispiel 3 | 23 | 22,5 | 21 | 20 | 63,5 | 62 | 59,5 | 57,5 |
| Vergleichsbeispiel 3-1 | 15 | 20,5 | 18 | 17,5 | 46,5 | 58 | 51 | 49,5 |
| Vergleichsbeispiel 3-2 | 22 | 21 | 19 | 18 | 59 | 57 | 50,5 | 48,5 |

Die erfindungsgemäß hergestellten Polymere zeigen bei gleicher Dosierung bessere Verflüssigungswirkungen (Wasserreduktion) direkt nach Herstellung des Betons im Vergleich zu den Referenzprodukten. Weiterhin weisen sie weder eine für den Anwender unerwünschte Nachverflüssigung noch einen merklichen Verlust der Verarbeitbarkeit auf, d.h. die für den Betonhersteller als Anwender der Produkte wesentlichen Gebrauchseigenschaften sind bei den erfindungsgemäßen Polymeren deutlich verbessert.

## Patentansprüche

1. Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisati-onsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das in dem Polymerisationsreaktor vorgelegte Polyethermakromonomer zu mindestens 70 Mol-% durch die radikalische Polymerisation umgesetzt wird, durch die Umsetzung des Säuremonomers in dem Copolymer eine Säurestruktureinheit entsteht, welche sich auf den pH-Wert des wässrigen Mediums in einem geringeren Maße senkend auswirkt als das Säuremonomer als solches, wobei die Dosierung des Säuremonomers in den Polymerisationsreaktor in der Weise erfolgt, dass zunächst in dem wässrigen Medium ein Polymerisations-pH-Wert eingestellt wird und anschließend bis zur Umsetzung von 70 Mol-% des in dem Polymerisationsreaktor vorgelegten Polyethermakromonomers soviel Säuremonomer pro Zeiteinheit in den Polymerisationsreaktor eingeleitet wird, dass der pH-Wert in dem wässrigen Medium höchstens ± 0,3 vom zunächst eingestellten Polymerisations-pH-Wert abweicht.

2. Verfahren nach Anspruch 1, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) ist 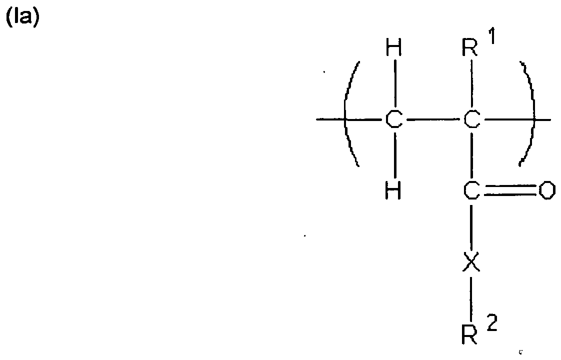 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 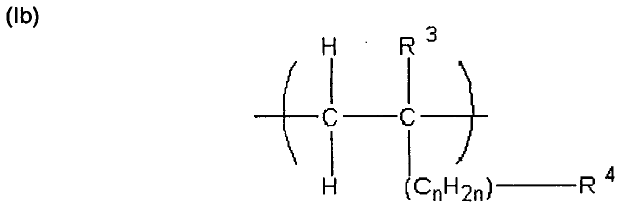 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 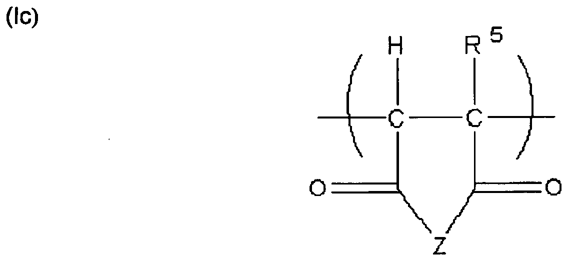 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 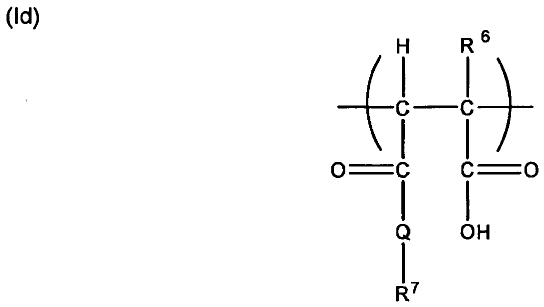 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

3. Verfahren nach Anspruch 1 oder 2, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

4. Verfahren nach einem der Ansprüche 1 bis 3, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) ist 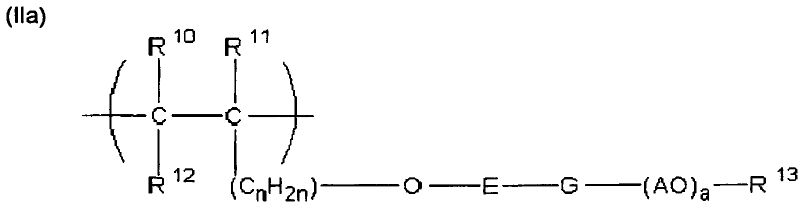 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylengruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 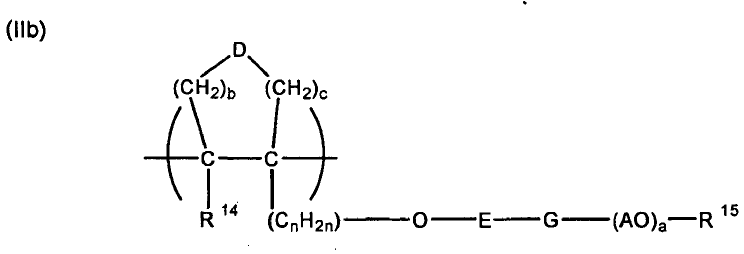 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylengruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 o-der 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 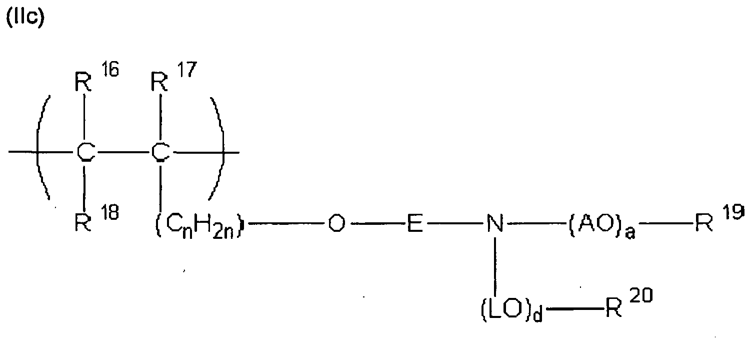 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylengruppe, CH₂-C₆H₁₀, ortho, meta oder para substituiert vorliegendes C₆H₄ und/oder durch eine nicht vorhandene Einheit;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

5. Verfahren nach einem der Ansprüche 1 bis 4, **dadurch gekennzeichnet, dass** als Polyethermakromonomer alkoxyliertes Isoprenol und/oder alkoxylierter Hydroxybutylvinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 340 eingesetzt wird.

6. Verfahren nach einem der Ansprüche 1 bis 5, **dadurch gekennzeichnet, dass** als monomerer Ausgangsstoff eine vinylisch ungesättigte Verbindung in den Polymerisationsreaktor gegeben wird, welche durch Polymerisation umgesetzt wird und dadurch eine Struktureinheit im Copolymer erzeugt wird, die gemäß der allgemeinen Formeln (IIIa) und/oder (IIIb) vorliegt 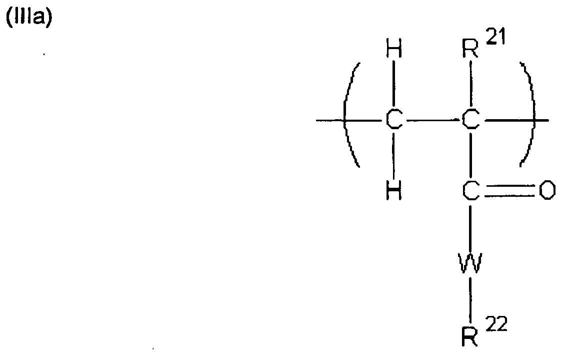 mit
R²¹ gleich oder verschieden sowie repräsentiert durch H und/oder eine unverzweigte oder verzweigte C₁ - C₄ Alkylgruppe;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 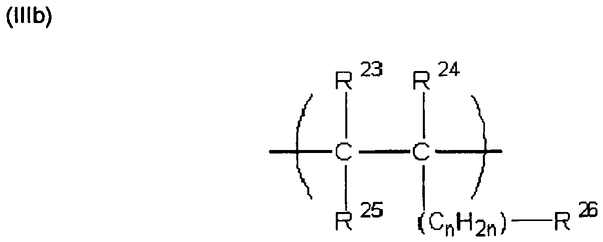 mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

7. Verfahren nach einem der Ansprüche 1 bis 6, **dadurch gekennzeichnet, dass** als radikalische Polymerisationsinitiator ein Redoxinitiatorsystem eingesetzt wird.

8. Verfahren nach Anspruch 7, **dadurch gekennzeichnet, dass** als Redoxinitiatorsystem die Zusammenstellung H₂O₂/FeSO₄ gewählt wird, welche zusammen mit einem Reduktionsmittel eingesetzt wird.

9. Verfahren nach Anspruch 8, **dadurch gekennzeichnet, dass** als Reduktionsmittel Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon, eingesetzt werden.

10. Verfahren nach einem der Ansprüche 8 oder 9, **dadurch gekennzeichnet, dass** nach Einstellung des Polymerisations-pH-Werts und während der Eindosierung des Säuremonomers eine Komponente des Redoxinitiatorsystems und/oder Reduktionsmittel in den Polymerisationsreaktor eingeleitet werden.

11. Verfahren nach einem der Ansprüche 1 bis 10, **dadurch gekennzeichnet, dass** der Polymerisations-pH-Wert in dem wässrigen Medium so eingestellt wird, dass bezüglich des eingesetzten radikalischen Polymerisationsinitiators die Radikalbildung pro Zeiteinheit in etwa maximal ist.

12. Verfahren nach einem der Ansprüche 1 bis 11, **dadurch gekennzeichnet, dass** das wässrige Medium in Form einer wässrigen Lösung vorliegt.

13. Verfahren nach einem der Ansprüche 1 bis 12, **dadurch gekennzeichnet, dass** der Polymerisationsreaktor als semikontinuierlicher Rührkessel vorliegt.

14. Verfahren nach einem der Ansprüche 1 bis 13, **dadurch gekennzeichnet, dass** das in dem Polymerisationsreaktor vorgelegte Polyethermakromonomer zu mindestens 80 Mol-%, bevorzugt zu mindestens 90 Mol-% durch die radikalische Polymerisation umgesetzt wird.

15. Verfahren nach einem der Ansprüche 1 bis 14, **dadurch gekennzeichnet, dass** bis zur Umsetzung von 70 Mol-% des in dem Polymerisationsreaktor vorgelegten Polyethermakromonomers soviel Säuremonomer pro Zeiteinheit in den Polymerisationsreaktor eingeleitet wird, dass der pH-Wert in dem wässrigen Medium höchstens ± 0,2, bevorzugt höchstens ± 0,1 vom zunächst eingestellten Polymerisations-pH-Wert abweicht.

16. Verfahren nach einem der Ansprüche 1 bis 14, **dadurch gekennzeichnet, dass** das in dem Polymerisationsreaktor vorgelegte Polyethermakromonomer zu mindestens 80 Mol-% durch die radikalische Polymerisation umgesetzt wird und dass bis zur Umsetzung von 80 Mol-% des in dem Polymerisationsreaktor vorgelegten Polyethermakromonomers soviel Säuremonomer pro Zeiteinheit in den Polymerisationsreaktor eingeleitet wird, dass der pH-Wert in dem wässrigen Medium höchstens ± 0,3 vom zunächst eingestellten Polymerisations-pH-Wert abweicht.

17. Verfahren nach einem der Ansprüche 1 bis 16, **dadurch gekennzeichnet, dass** der Polymerisations-pH-Wert 4,0 bis 7,0, bevorzugt 4,5 bis 6,5 sowie besonders bevorzugt 4,8 bis 6,0 und die Temperatur des wässrigen Mediums während der radikalischen Polymerisation 0 bis 90 °C, bevorzugt 10 bis 35 °C, beträgt.

18. Verfahren nach einem der Ansprüche 1 bis 17, **dadurch gekennzeichnet, dass** das Säuremonomer zusammen mit Wasser in der Dosiereinheit vorgelegt wird und eine wässrige Lösung des Säuremonomers aus der Dosiereinrichtung in den Polymerisationsreaktor eindosiert wird, wobei vor der Eindosierung in den Polymerisationsreaktor eine Teilmenge des Säuremonomers durch die Zugabe von Base in das entsprechende Säuremonomersalz umgesetzt werden kann.

19. Verfahren nach einem der Ansprüche 1 bis 18, **dadurch gekennzeichnet, dass** die Einstellung des Polymerisations-pH-Werts in dem wässrigen Medium durch Eindosierung des Säuremonomers in den Polymerisationsreaktor sowie Zugabe einer Base in den Polymerisationsreaktor und/oder in die Dosiereinrichtung erfolgt, so dass bereits vor der Einstellung des Polymerisations-pH-Werts Säuremonomer und/oder Säuremomersalz in dem Polymerisationsreaktor vorgelegt wird.

20. Verfahren nach einem der Ansprüche 1 bis 19, **dadurch gekennzeichnet, dass** soviel Polyethermakromonomer pro eindosiertes Mol Säuremonomer in dem Polymerisationsreaktor vorgelegt wird, dass sich im gebildeten Copolymer ein arithmetisch mittleres molares Verhältnis von Säuremonomerstruktureinheiten zu Polyethermakromonomerstruktureinheiten von 20:1 bis 1:1, bevorzugt von 12:1 bis 1:1 einstellt..

21. Verfahren nach einem der Ansprüche 1 bis 20, **dadurch gekennzeichnet, dass** insgesamt mindestens 45 Mol %, bevorzugt jedoch mindestens 80 Mol % aller Struktureinheiten des Copolymers durch radikalische Polymerisation von Säuremonomer und Polyethermakromonomer erzeugt werden.

22. Verfahren nach einem der Ansprüche 1 bis 21, **dadurch gekennzeichnet, dass** ein Kettenregler, welcher bevorzugt in gelöster Form vorliegt, in den Polymerisationsreaktor eingeleitet wird.

## Claims

1. Process for the preparation of a copolymer in a semicontinuous mode of operation in a polymerization apparatus containing a polymerization reactor connected to a metering device, in each case acid monomer being initially introduced into the metering device and polyether macromonomer and water into the polymerization reactor, acid monomer being metered from the metering device into the polymerization reactor, free radical polymerization initiator being passed into the polymerization reactor before and/or during the metering of the acid monomer into the polymerization reactor, so that an aqueous medium forms in the polymerization reactor, in which aqueous medium acid monomer and polyether macromonomer are reacted by free radical polymerization with formation of the copolymer, at least 70 mol% of the polyether macromonomer initially introduced into the polymerization reactor being converted by the free radical polymerization, the conversion of the acid monomer giving rise in the copolymer to an acid structural unit which reduces the pH of the aqueous medium to a lesser extent than the acid monomer as such, the metering of the acid monomer into the polymerization reactor being effected in such a way that first a polymerization pH is established in the aqueous medium and then, until the conversion of 70 mol% of the polyether macromonomer initially introduced into the polymerization reactor, acid monomer is passed into the polymerization reactor in an amount per unit time such that the pH in the aqueous medium deviates by not more than ± 0.3 from the initially established polymerization pH.

2. Process according to Claim 1, **characterized in that** the reaction of the acid monomer produces in the copolymer a structural unit which is according to one of the general formulae (Ia), (Ib), (Ic) and/or (Id) 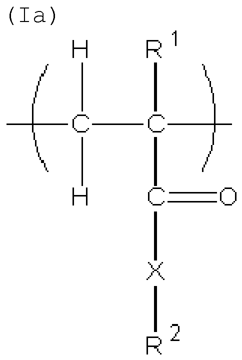 where
R¹ is identical or different and is represented by H and/or a straight-chain or branched C₁ - C₄ alkyl group;
X is identical or different and is represented by NH-(CₙH₂ₙ) where n = 1, 2, 3 or 4 and/or O-(CₙH₂ₙ) where n = 1, 2, 3 or 4 and/or by a unit not present;
R² is identical or different and is represented by OH, SO₃H, PO₃H₂, O-PO₃H₂ and/or para-substituted C₆H₄-SO₃H, with the proviso that, if X is a unit not present, R² is represented by OH; 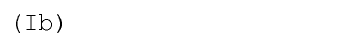 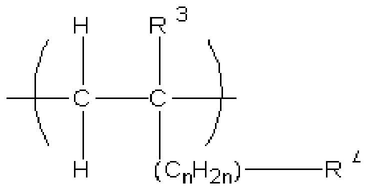 where
R³ is identical or different and is represented by H and/or a straight-chain or branched C₁ - C₄ alkyl group;
n = 0, 1, 2, 3 or 4;
R⁴ is identical or different and is represented by SO₃H, PO₃H₂, O-PO₃H₂ and/or C₆H₄-SO₃H present in para-substituted form; 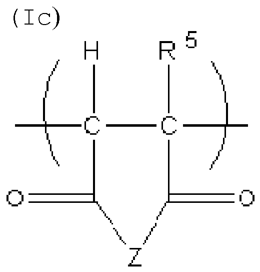 where
R⁵ is identical or different and is represented by H and/or a straight-chain or branched C₁ - C₄ alkyl group;
Z is identical or different and is represented by 0 and/or NH; 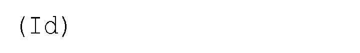 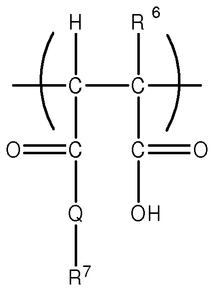 where
R⁶ is identical or different and is represented by H and/or a straight-chain or branched C₁ - C₄ alkyl group;
Q is identical or different and is represented by NH and/or 0;
R⁷ is identical or different and is represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n = 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 with R⁹ identical or different and represented by a straight-chain or branched C₁ - C₄ alkyl group.

3. Process according to Claim 1 or 2, **characterized in that** methacrylic acid, acrylic acid, maleic acid, maleic anhydride, a monoester of maleic acid or a mixture of a plurality of these components is used as the acid monomer.

4. Process according to any of Claims 1 to 3, **characterized in that** the reaction of the polyether macromonomer produces in the copolymer a structural unit which is according to one of the general formulae (IIa), (IIb) and/or (IIc) 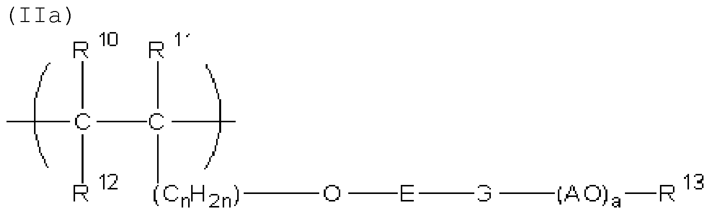 where
R¹⁰, R¹¹ and R¹² are in each case identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or a unit not present;
G is identical or different and is represented by 0, NH and/or CO-NH, with the proviso that, if E is a unit not present, G is also present as a unit not present;
A is identical or different and is represented by CₓH₂ₓ where x = 2, 3, 4 and/or 5 (preferably x = 2) and/or CH₂CH(C₆H₅) ;
n is identical or different and is represented by 0, 1, 2, 3, 4 and/or 5;
a is identical or different and is represented by an integer from 2 to 350 (preferably 10 - 200);
R¹³ is identical or different and is represented by H, a straight-chain or branched C₁ - C₄ alkyl group, CO-NH₂, and/or COCH₃; 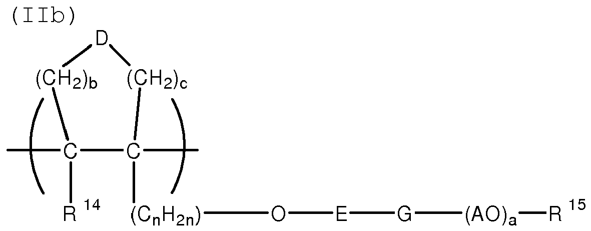 where
R¹⁴ is identical or different and is represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or by a unit not present;
G is identical or different and is represented by a unit not present, 0, NH and/or CO-NH, with the proviso that, if E is a unit not present, G is also present as a unit not present;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5;
a is identical or different and is represented by an integer from 2 to 350;
D is identical or different and is represented by a unit not present, NH and/or 0, with the proviso that, if D is a unit not present: b = 0, 1, 2, 3 or 4 and c
= 0, 1, 2, 3 or 4, where b + c = 3 or 4, and with the proviso that if D is NH and/or 0: b = 0, 1, 2 or 3, c = 0, 1, 2 or 3, where b + c = 2 or 3;
R¹⁵ is identical or different and is represented by H, a straight-chain or branched C₁ - C₄ alkyl group, CO-NH₂, and/or COCH₃; 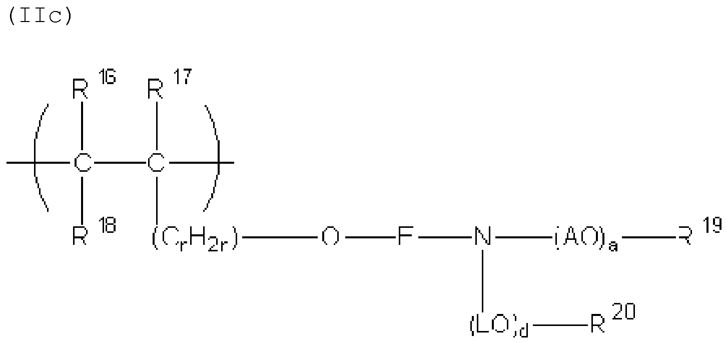 where
R¹⁶, R¹⁷ and R¹⁸ are in each case identical or different and, independently of one another are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or by a unit not present;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5;
L is identical or different and is represented by CₓH₂ₓ where x = 2, 3, 4 and/or 5 and/or CH₂-CH(C₆H₅) ;
a is identical or different and is represented by an integer from 2 to 350;
d is identical or different and is represented by an integer from 1 to 350;
R¹⁹ is identical or different and is represented by H and/or a straight-chain or branched C₁ - C₄ alkyl group,
R²⁰ is identical or different and is represented by H and/or a straight-chain C₁ - C₄ alkyl group.

5. Process according to any of Claims 1 to 4, **characterized in that** isoprenol and/or alkoxylated hydroxybutyl vinyl ether and/or alkoxylated (meth)allyl alcohol and/or vinylated methyl polyalkylene glycol having preferably in each case an arithmetic mean number of oxyalkylene groups of 4 to 340 is used as the polyether macromonomer.

6. Process according to any of Claims 1 to 5, **characterized in that** a vinylically unsaturated compound is introduced into the polymerization reactor as a monomeric starting material, which compound is reacted by polymerization and thereby produces in the copolymer a structural unit which is present according to the general formula (IIIa) and/or (IIIb) 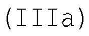 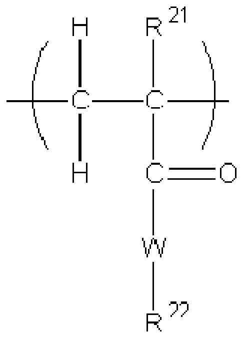 where
R²¹ is identical or different and is represented by H and/or a straight-chain or branched C₁ - C₄ alkyl group;
W is identical or different and is represented by 0 and/or NH;
R²² is identical or different and is represented by a straight-chain or branched C₁ - C₅-monohydroxyalkyl group; 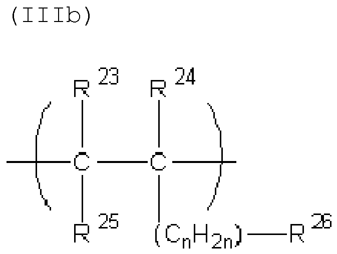 where
R²³, R²⁴ and R²⁵ are in each case identical or different and, in each case independently, are represented by H and/or a straight-chain or branched C₁ - C₄ alkyl group;
n is identical or different and is represented by 0, 1, 2, 3 and/or 4;
R²⁶ is identical or different and is represented by (C₆H₅), OH and/or -COCH₃.

7. Process according to any of Claims 1 to 6, **characterized in that** a redox initiator system is used as the free radical polymerization initiator.

8. Process according to Claim 7, **characterized in that** the combination H₂O₂/FeSO₄ which is used together with a reducing agent, is chosen as the redox initiator system.

9. Process according to Claim 8, **characterized in that** the disodium salt of 2-hydroxy-2-sulphinatoacetic acid, the disodium salt of 2-hydroxy-2-sulphonatoacetic acid, sodium hydroxymethanesulphinate, ascorbic acid, isoascorbic acid and mixtures thereof are used as the reducing agent.

10. Process according to either of Claims 8 and 9, **characterized in that** a component of the redox initiator system and/or reducing agent are passed into the polymerization reactor after the polymerization pH has been established and while the acid monomer is metered in.

11. Process according to any of Claims 1 to 10, **characterized in that** the polymerization pH in the aqueous medium is established so that, based on the free radical polymerization initiator used, the free radical formation per unit time is approximately maximum.

12. Process according to any of Claims 1 to 11, **characterized in that** the aqueous medium is present in the form of an aqueous solution.

13. Process according to any of Claims 1 to 12, **characterized in that** the polymerization reactor is present as a semicontinuous stirred tank.

14. Process according to any of Claims 1 to 13, **characterized in that** at least 80 mol%, preferably at least 90 mol%, of the polyether macromonomer initially introduced into the polymerization reactor is converted by the free radical polymerization.

15. Process according to any of Claims 1 to 14, **characterized in that**, up to a conversion of 70 mol% of the polyether macromonomer initially introduced into the polymerization reactor, acid monomer is passed into the polymerization reactor in an amount per unit time such that the pH in the aqueous medium deviates by not more than ± 0.2, preferably not more than ± 0.1, from the initially established polymerization pH.

16. Process according to any of Claims 1 to 14, **characterized in that** at least 80 mol% of the polyether macromonomer initially introduced into the polymerization reactor is converted by the free radical polymerization, and **in that**, until conversion of 80 mol% of the polyether macromonomer initially introduced into the polymerization reactor, acid monomer is passed into the polymerization reactor in an amount per unit time such that the pH in the aqueous medium deviates by not more than ± 0.3 from the initially established polymerization pH.

17. Process according to any of Claims 1 to 16, **characterized in that** the polymerization pH is 4.0 to 7.0, preferably 4.5 to 6.5 and particularly preferably 4.8 to 6.0 and the temperature of the aqueous medium during the free radical polymerization is 0 to 90°C, preferably 10 to 35°C.

18. Process according to any of Claims 1 to 17, **characterized in that** the acid monomer is initially introduced together with water into the metering unit and an aqueous solution of the acid monomer is metered from the metering device into the polymerization reactor, it being possible for a portion of the acid monomer to be converted into the corresponding acid monomer salt by addition of base before being metered into the polymerization reactor.

19. Process according to any of Claims 1 to 18, **characterized in that** the polymerization pH in the aqueous medium is established by metering the acid monomer into the polymerization reactor and adding a base to the polymerization reactor and/or to the metering device, so that acid monomer and/or acid monomer salt is already present in the polymerization reactor before the polymerization pH is established.

20. Process according to any of Claims 1 to 19, **characterized in that** polyether macromonomer is initially introduced into the polymerization reactor in an amount per mole of acid monomer metered in such that an arithmetic mean molar ratio of acid monomer structural units to polyether macromonomer structural units of 20:1 to 1:1, preferably of 12:1 to 1:1, is established in the copolymer formed.

21. Process according to any of Claims 1 to 20, **characterized in that** altogether at least 45 mol%, but preferably at least 80 mol%, of all structural units of the copolymer are produced by free radical polymerization of acid monomer and polyether macromonomer.

22. Process according to any of Claims 1 to 21, **characterized in that** a chain regulator, which is preferably in dissolved form, is passed into the polymerization reactor.

## Revendications

1. Procédé pour la préparation d'un copolymère dans un mode opératoire semi-continu dans un dispositif de polymérisation contenant un réacteur de polymérisation relié à un dispositif de dosage, un monomère acide étant disposé au préalable dans le dispositif de dosage et un macromonomère de polyéther et de l'eau étant chacun disposés au préalable dans le réacteur de polymérisation, le monomère acide étant dosé du dispositif de dosage dans le réacteur de polymérisation, un initiateur de polymérisation radicalaire étant introduit dans le réacteur de polymérisation avant et/ou pendant le dosage du monomère acide dans le réacteur de polymérisation, de telle sorte qu'il se forme dans le réacteur de polymérisation un milieu aqueux, dans lequel le monomère acide et le macromonomère de polyéther sont transformés en formant le copolymère par polymérisation radicalaire, le macromonomère de polyéther disposé au préalable dans le réacteur de polymérisation étant transformé à raison d'au moins 70% en mole par polymérisation radicalaire, une unité structurale acide se formant dans le copolymère, par la transformation du monomère acide, qui agit en abaissant le pH du milieu aqueux dans une moindre mesure que le monomère acide en tant que tel, le dosage du monomère acide dans le réacteur de polymérisation ayant lieu de manière telle qu'on règle d'abord dans le milieu aqueux un pH de polymérisation, puis on introduit jusqu'à la transformation de 70% en mole du macromonomère de polyéther disposé au préalable dans le réacteur de polymérisation une quantité de monomère acide par unité de temps dans le réacteur de polymérisation telle que le pH dans le milieu aqueux s'écarte au plus de ± 0,3 du pH de polymérisation réglé au préalable.

2. Procédé selon la revendication 1, **caractérisé en ce qu'**une unité structurale est générée dans le copolymère par transformation du monomère acide, qui est selon l'une des formules générales (Ia), (Ib), (Ic) et/ou (Id) 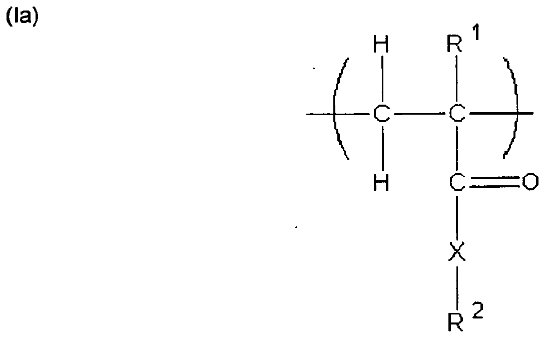 où
R¹ est identique ou différent et représente H et/ou un groupe C₁-C₄-alkyle non ramifié ou ramifié ;
X est identique ou différent et représente NH-(CnH₂n) avec n = 1, 2, 3 ou 4 et/ou O-(CₙH₂ₙ) avec n = 1, 2, 3 ou 4 et/ou une unité non présente ;
R² est identique ou différent et représente OH, SO₃H, PO₃H₂, O-PO₃H₂ et/ou (C₆H₄ substitué en position para)-SO₃H, à condition que si X est une unité non présente, R² représente OH ; 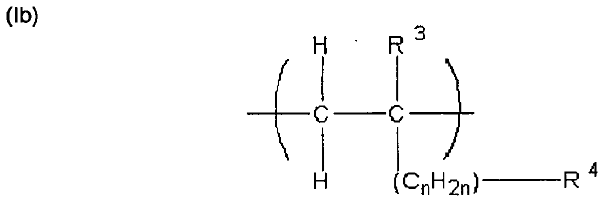
où
R³ est identique ou différent et représente H et/ou un groupe C₁-C₄-alkyle non ramifié ou ramifié ;
n = 0, 1, 2, 3 ou 4
R⁴ est identique ou différent et représente SO₃H, PO₃H₂, O-PO₃H₂ et/ou (C₆H₄ substitué en position para)-SO₃H ; 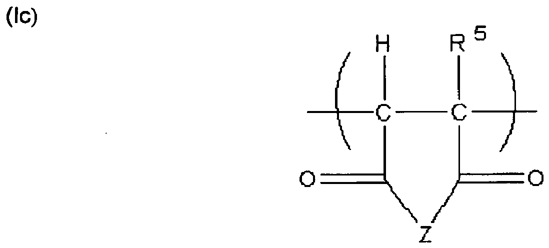
où
R⁵ est identique ou différent et représente H et/ou un groupe C₁-C₄-alkyle non ramifié ou ramifié ;
Z est identique ou différent et représente 0 et/ou NH ; 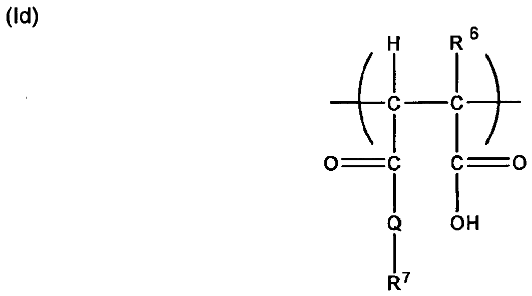
où
R⁶ est identique ou différent et représente H et/ou un groupe C₁-C₄-alkyle non ramifié ou ramifié ;
Q est identique ou différent et représente NH et/ou O ;
R⁷ est identique ou différent et représente H, (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350 avec R⁹ étant identique ou différent et représentant un groupe C₁-C₄-alkyle non ramifié ou ramifié.

3. Procédé selon la revendication 1 ou 2, **caractérisé en ce qu'**on utilise, comme monomère acide, de l'acide méthacrylique, de l'acide acrylique, de l'acide maléique, de l'anhydride de l'acide maléique, un semi-ester de l'acide maléique ou un mélange de plusieurs de ces composants.

4. Procédé selon l'une quelconque des revendications 1 à 3, **caractérisé en ce qu'**une unité structurale est générée dans le copolymère par transformation du macromonomère de polyéther, qui est selon l'une des formules générales (IIa), (IIb) et/ou (IIc) 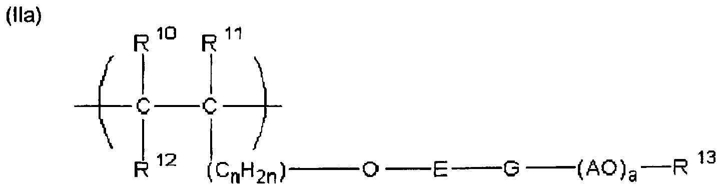 où
R¹⁰, R¹¹ ainsi que R¹² sont à chaque fois identiques ou différents et représentent indépendamment les uns des autres H et/ou un groupe C₁-C₄-alkyle non ramifié ou ramifié ;
E est identique ou différent et représente un groupe C₁-C₆-alkylène non ramifié ou ramifié, un groupe cyclohexylène, CH₂-C₆H₁₀, C₆H₄ substitué en position ortho, méta ou para et/ou une unité non présente ;
G est identique ou différent et représente 0, NH et/ou CO-NH, à condition que si E est une unité non présente, G se trouve également sous forme d'unité non présente ;
A est identique ou différent et représente CₓH₂ₓ avec x = 2, 3, 4 et/ou 5 (de préférence x = 2) et/ou CH₂CH(C₆H₅) ;
n est identique ou différent et représenté par 0, 1, 2, 3, 4 et/ou 5 ;
a est identique ou différent et représente un nombre entier de 2 à 350 (de préférence 10-200) ;
R¹³ est identique ou différent et représente H, un groupe C₁-C₄-alkyle non ramifié ou ramifié, CO-NH₂ et/ou COCH₃ ; 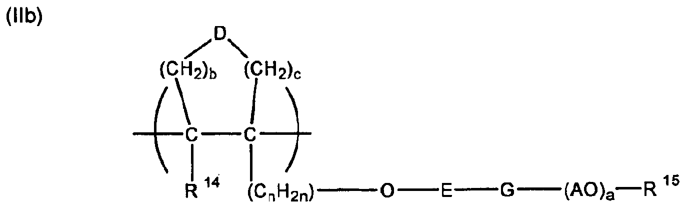
où
R¹⁴ est identique ou différent et représente H et/ou un groupe C₁-C₄-alkyle non ramifié ou ramifié ;
E est identique ou différent et représente un groupe C₁-C₆-alkylène non ramifié ou ramifié, un groupe cyclohexylène, CH₂-C₆H₁₀, C₆H₄ substitué en position ortho, méta ou para et/ou une unité non présente ;
G est identique ou différent et représente une unité non présente, 0, NH et/ou CO-NH, à condition que si E est une unité non présente, G se trouve également sous forme d'unité non présente ;
A est identique ou différent et représente CₓH₂ₓ avec x = 2, 3, 4 et/ou 5 et/ou CH₂CH(C₆H₅) ;
n est identique ou différent et représente 0, 1, 2, 3, 4 et/ou 5 ;
a est identique ou différent et représente un nombre entier de 2 à 350 ;
D est identique ou différent et représente une unité non présente, NH et/ou 0, à condition que si D est une unité non présente : b = 0, 1, 2, 3 ou 4 et c = 0, 1, 2, 3 ou 4, où b + c = 3 ou 4, et à condition que lorsque D représente NH et/ou O : b = 0, 1, 2 ou 3, c = 0, 1, 2 ou 3, où b + c = 2 ou 3 ;
R¹⁵ est identique ou différent et représente H, un groupe C₁-C₄-alkyle non ramifié ou ramifié, CO-NH₂ et/ou COCH₃ ; 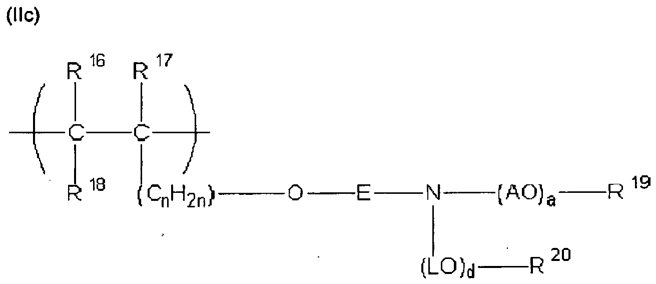
où
R¹⁶, R¹⁷ ainsi que R¹⁸ sont à chaque fois identiques ou différents et représentent indépendamment les uns des autres H et/ou un groupe C₁-C₄-alkyle non ramifié ou ramifié ;
E est identique ou différent et représente un groupe C₁-C₆-alkylène non ramifié ou ramifié, un groupe cyclohexylène, CH₂-C₆H₁₀, C₆H₄ substitué en position ortho, méta ou para et/ou une unité non présente ;
A est identique ou différent et représente CₓH₂ₓ avec x = 2, 3, 4 et/ou 5 et/ou CH₂CH(C₆H₅) ;
n est identique ou différent et représente 0, 1, 2, 3, 4 et/ou 5 ;
L est identique ou différent et représente CₓH₂ₓ avec x = 2, 3, 4 et/ou 5 et/ou CH₂-CH(C₆H₅) ;
a est identique ou différent et représente un nombre entier de 2 à 350 ;
d est identique ou différent et représente un nombre entier de 1 à 350 ;
R¹⁹ est identique ou différent et représente H et/ou un groupe C₁-C₄-alkyle non ramifié ou ramifié,
R²⁰ est identique ou différent et représente H et/ou un groupe C₁-C₄-alkyle non ramifié ou ramifié.

5. Procédé selon l'une quelconque des revendications 1 à 4, **caractérisé en ce qu'**on utilise, comme macromonomère de polyéther, l'isoprénol alcoxylé et/ou l'hydroxybutylvinyléther alcoxylé et/ou l'alcool (méth)allylique alcoxylé et/ou le méthylpolyalkylèneglycol vinylé présentant de préférence à chaque fois un nombre arithmétique moyen de groupes oxyalkylène de 4 à 340.

6. Procédé selon l'une quelconque des revendications 1 à 5, **caractérisé en ce qu'**on introduit dans le réacteur de polymérisation, comme substance de départ monomère, un composé vinyliquement insaturé qui est transformé par polymérisation et qu'une unité structurale est ainsi générée dans le copolymère, qui se présente selon les formules générales (IIIa) et/ou (IIIb) 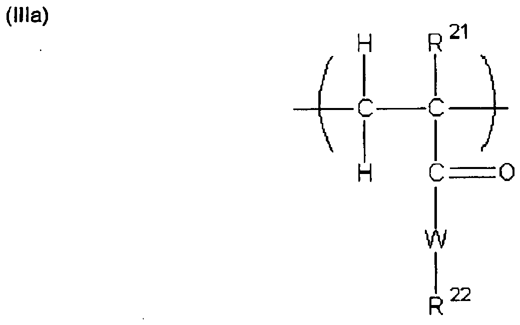 où
R²¹ est identique ou différent et représente H et/ou un groupe C₁-C₄-alkyle non ramifié ou ramifié ;
W est identique ou différent et représente 0 et/ou NH ;
R²² est identique ou différent et représente un groupe C₁-C₅-monohydroxyalkyle ramifié ou non ramifié ; 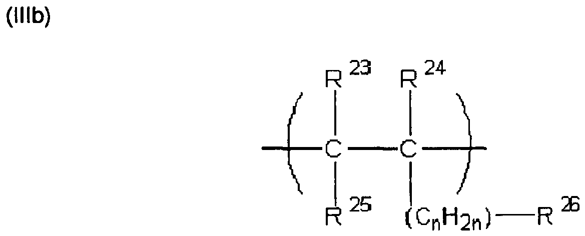
où
R²³, R²⁴ et R²⁵ sont à chaque fois identiques ou différents et représentent à chaque fois indépendamment H et/ou un groupe C₁-C₄-alkyle non ramifié ou ramifié ;
n est identique ou différent et représente 0, 1, 2, 3 et/ou 4 ;
R²⁶ est identique ou différent et représente (C₆H₅), OH et/ou -COCH₃.

7. Procédé selon l'une quelconque des revendications 1 à 6, **caractérisé en ce qu'**on utilise, comme initiateur de polymérisation radicalaire un système initiateur de type redox.

8. Procédé selon la revendication 7, **caractérisé en ce qu'**on choisit comme système initiateur de type redox la composition H₂O₂/FeSO₄, qui est utilisée ensemble avec un réducteur.

9. Procédé selon la revendication 8, **caractérisé en ce qu'**on utilise comme réducteur du sulfite de sodium, du sel disodique de l'acide 2-hydroxy-2-sulfinatoacétique, du sel disodique de l'acide 2-hydroxy-2-sulfonatoacétique, de l'hydroxyméthanesulfinate de sodium, de l'acide ascorbique, de l'acide iso-ascorbique ou leurs mélanges.

10. Procédé selon l'une quelconque des revendications 8 ou 9, **caractérisé en ce qu'**après le réglage du pH de polymérisation et pendant le dosage du monomère acide, un composant du système initiateur de type redox et/ou le réducteur est/sont introduit(s) dans le réacteur de polymérisation.

11. Procédé selon l'une quelconque des revendications 1 à 10, **caractérisé en ce que** le pH de polymérisation dans le milieu aqueux est réglé de manière telle que la formation de radicaux par unité de temps est environ maximale par rapport à l'initiateur de polymérisation radicalaire utilisé.

12. Procédé selon l'une quelconque des revendications 1 à 11, **caractérisé en ce que** le milieu aqueux se trouve sous forme d'une solution aqueuse.

13. Procédé selon l'une quelconque des revendications 1 à 12, **caractérisé en ce que** le réacteur de polymérisation se trouve sous forme de cuve agitée semi-continue.

14. Procédé selon l'une quelconque des revendications 1 à 13, **caractérisé en ce que** le macromonomère de polyéther disposé au préalable dans le réacteur de polymérisation est transformé à raison d'au moins 80% en mole, de préférence d'au moins 90% en mole par la polymérisation radicalaire.

15. Procédé selon l'une quelconque des revendications 1 à 14, **caractérisé en ce qu'**on introduit, jusqu'à la transformation de 70% en mole du macromonomère de polyéther disposé au préalable dans le réacteur de polymérisation, une quantité de monomère acide par unité de temps dans le réacteur de polymérisation telle que le pH dans le milieu aqueux s'écarte d'au plus de ± 0,2, de préférence d'au plus de ± 0,1 du pH de polymérisation réglé au préalable.

16. Procédé selon l'une quelconque des revendications 1 à 14, **caractérisé en ce qu'**on transforme le macromonomère de polyéther disposé au préalable dans le réacteur de polymérisation à raison d'au moins 80% en mole par la polymérisation radicalaire et **en ce qu'**on introduit, jusqu'à la transformation de 80% en mole du macromonomère de polyéther disposé au préalable dans le réacteur de polymérisation, une quantité de monomère acide par unité de temps dans le réacteur de polymérisation telle que le pH dans le milieu aqueux s'écarte d'au plus de ± 0,3 du pH de polymérisation réglé au préalable.

17. Procédé selon l'une quelconque des revendications 1 à 16, **caractérisé en ce que** le pH de polymérisation vaut 4,0 à 7,0, de préférence 4,5 à 6,5 ainsi que de manière particulièrement préférée 4,8 à 6,0 et la température du milieu aqueux pendant la polymérisation radicalaire est de 0 à 90°C, de préférence de 10 à 35°C.

18. Procédé selon l'une quelconque des revendications 1 à 17, **caractérisé en ce que** le monomère acide est disposé au préalable ensemble avec l'eau dans l'unité de dosage et on dose une solution aqueuse du monomère acide du dispositif de dosage dans le réacteur de polymérisation, une quantité partielle du monomère acide pouvant être transformée en sel de monomère acide correspondant avant le dosage dans le réacteur de polymérisation par l'addition de base.

19. Procédé selon l'une quelconque des revendications 1 à 18, **caractérisé en ce que** le réglage du pH de polymérisation dans le milieu aqueux a lieu par dosage du monomère acide dans le réacteur de polymérisation ainsi que par addition d'une base dans le réacteur de polymérisation et/ou dans le dispositif de dosage, de manière telle que du monomère acide et/ou du sel de monomère acide est déjà disposé au préalable dans le réacteur de polymérisation avant le réglage du pH de polymérisation.

20. Procédé selon l'une quelconque des revendications 1 à 19, **caractérisé en ce qu'**on dispose au préalable une quantité de macromonomère de polyéther par mole de monomère acide dosée dans le réacteur de polymérisation telle qu'il se règle dans le copolymère formé un rapport molaire arithmétique moyen d'unités structurales de monomère acide à unités structurales de macromonomère de polyéther de 20:1 à 1:1, de préférence de 12:1 à 1:1.

21. Procédé selon l'une quelconque des revendications 1 à 20, **caractérisé en ce qu'**au total au moins 45% en mole, de préférence cependant au moins 80% en mole de toutes les unités structurales du copolymère sont générés par polymérisation radicalaire de monomères acides et de macromonomères de polyéther.

22. Procédé selon l'une quelconque des revendications 1 à 21, **caractérisé en ce qu'**on introduit dans le réacteur de polymérisation un agent de régulation de chaîne, qui se trouve de préférence sous forme dissoute.
